# EUROPEAN PATENT APPLICATION

(11) **EP 4 848 365 A1**
(43) Date of publication of application: **02.12.2026**
(21) Application number: 25179339.4
(22) Date of filing: 28.05.2025
(51) Int. Cl.: H01M 4/38, H01M 4/58, H01M 8/18

(54) **ELECTROCHEMICAL ENERGY STORAGE DEVICE**

(71) Applicant: BASF SE, 67056 Ludwigshafen am Rhein (DE)
(72) Inventor: Heidebrecht, Peter, 67056 Ludwigshafen (DE); Ott, Detlef, 67056 Ludwigshafen (DE); Dötz, Florian, 67059 Ludwigshafen (DE)
(74) Representative: Kudla, Karsten

(57) **Abstract**

The invention relates to an electrochemical energy storage device, comprising:
(a) a first storage vessel (17) for storing an anolyte;
(b) a second storage vessel (19) for storing a catholyte;
(c) a cell stack (33) comprising at least one planar electrochemical cell (3) with a first space (5) being connected to the first storage vessel (17), a second space (7) being connected to the second storage vessel (19), the first space (5) and the second space (7) being separated by an ion-conducting solid electrolyte (9) and a porous electrode (29) being accommodated in the second space (7).

## Description

The invention relates to an electrochemical energy storage device, comprising a first storage vessel for an anolyte, a second storage vessel for a catholyte and at least one electrochemical cell.

Electrochemical energy storage devices are also referred to in general as batteries or accumulators. Rechargeable batteries or accumulators, in particular, are used to enable electrical energy to be stored and used. To store large amounts of electrical energy, correspondingly powerful rechargeable batteries are required. For this purpose, it is possible to use batteries based on molten sodium and sulfur, for example. In order to achieve the corresponding capacity, a plurality of electrochemical cells that are electrically interconnected are generally used here in the electrochemical energy storage devices. Such electrochemical cells, which operate on the basis of a molten alkali metal as an anode and a cathodic reactant, generally sulfur, are described in WO-A 2017/102697, for example. Here, the molten alkali metal and the cathodic reactant are separated by a solid electrolyte which allows cations to pass through. At the cathode, there is a reaction between the alkali metal and the cathodic reactant. Where sodium is used as the alkali metal and sulfur is used as the cathodic reactant, this is the reaction of sodium and sulfur to form sodium polysulfide, for example. To charge the electrochemical energy storage device, the sodium polysulfide is decomposed into sodium and sulfur again at the electrode by the application of electrical energy.

The individual electrochemical cells are generally stacked in "battery packs" or, as an alternative, are placed parallel to one another in a housing to increase the power of the battery. To further increase the storage capacity of an electrochemical energy storage device using a molten alkali metal and a cathodic reaction participant, for example sulfur, it is known to use additional storage vessels. During discharge, the liquid alkali metal, for example sodium, is supplied to the solid electrolyte. The liquid alkali metal serves simultaneously as anode and forms cations which are transported through an ion-conducting solid electrolyte, for example a cation-conducting solid electrolyte, to the cathode. In a sodium/sulfur-battery, at the cathode, the sulfur flowing onto the cathode is reduced to polysulfide, i.e. reacted with the sodium ions to form sodium polysulfide. The corresponding sodium polysulfide can be collected in a further vessel. As an alternative, it is possible to collect the sodium polysulfide together with the sulfur in a vessel around the cathode space. Owing to the density difference, the sulfur rises and the sodium polysulfide settles. This density difference can also be utilized to effect a flow along the cathode. A corresponding battery design is described, for example, in WO-A 2011/161072.

WO-A 2010/135283 describes a sodium-sulfur battery in which separate vessels for sodium and sulfur are used in order to increase the range. Here, sodium and sulfur are each conveyed by means of pumps through the respective electrolyte spaces of an electrochemical cell.

Further electrochemical energy storage devices using separate storage vessels for the anolyte and for the catholyte are known for example from DE-A 10 2011 110 843, WO-A 2017/153292 or WO-A 2010/112466.

Presently, electrochemical cells being operated with sodium as anolyte and sulfur as catholyte have a tubular design. However, due to the tubular design, it is complex and expensive to change the battery design to either lower or higher duration times or to different system power.

Therefore, it is an object of the present invention to provide an electrochemical energy storage device that allows for easier modifications regarding duration times or system power.

This object is achieved by an electrochemical energy storage device, comprising:
(a) a first storage vessel for storing an anolyte;
(b) a second storage vessel for storing a catholyte;
(c) a cell stack comprising at least one planar electrochemical cell with a first space being connected to the first storage vessel, a second space being connected to the second storage vessel, the first space and the second space being separated by an ion-conducting solid electrolyte and a porous electrode being accommodated in the second space.

Using the first storage vessel for storing the anolyte and the second storage vessel for storing the catholyte allows for a simple adaption of the duration time. If a longer duration time is to be achieved, larger first and second storage vessels can be used and for a shorter duration time, the first and second storage vessels can be selected smaller, each with using a cell stack of the same size and with the same amount of electrochemical cells.

To prohibit a chemical reaction of the anolyte or the catholyte with the material the walls of the first and second storage vessels, the walls, cover and bottom of the first and second storage vessels are made of a material that is inert to the anolyte and the catholyte, respectively.

Suitable materials, the walls, cover and bottom of the first storage vessel can be made of, for example, are aluminum or stainless steel. If the material used for the walls, bottom or cover of the first storage vessel is not inert to the anolyte, the respective wall, bottom or cover is covered with a material that is inert to the anolyte. Suitable materials, the cover may be made of are, for example, carbon, FeCr or SiC.

Suitable materials, the walls, cover and bottom of the second storage vessel can be made of, for example, are aluminum or stainless steel. If the material used for the walls, bottom or cover of the second storage vessel is not inert to the catholyte, the respective wall, bottom or cover is covered with a material that is inert to the catholyte. Suitable materials, the cover may be made of are, for example, carbon, FeCr or SiC.

The electrochemical energy storage device preferably is operated with an alkali metal as anolyte and sulfur as catholyte. Particularly preferably, the anolyte is sodium and the catholyte is sulfur. When using sodium as anolyte and sulfur as catholyte, the reaction product obtained in the second space of each electrochemical cell by reaction of the sodium ions and the sulfur is sodium polysulfide.

For operating the electrochemical energy storage device with an alkali metal, particularly sodium, and sulfur, the alkali metal and the sulfur need to be molten. Therefore, the first storage vessel and the second storage vessel have to be heated to a temperature above the melting temperature of the sodium and the sulfur, respectively. To minimize the amount of heat released to the environment, it is preferred to insulate the first storage vessel and the second storage vessel. Material that can be used for insulating the first storage vessel and the second storage vessel can be any suitable insulation material, for example a mineral fiber based material (e.g. silica-aerogel material like SLENTEX^{®}).

Charging and discharging the electrochemical cell also is operated at a temperature above the melting temperature of the alkali metal, the sulfur and the resulting reaction product. For this reason, it is further preferred to also insulate the stack of electrochemical cells, wherein the material used for insulating the stack of electrochemical cells may be the same as used for insulating the first storage vessel and the second storage vessel.

Further, particularly for starting operation of the electrochemical cell, it is necessary to heat the stack of electrochemical cells. On the other hand, during discharging, heat is generated that needs to be removed. For heating and cooling, it is preferred to provide channels through which a heating medium or a cooling medium can flow. Depending on the medium used, it is possible that the heating medium and the cooling medium flow through the same channels or that different channels are used for the heating medium and the cooling medium.

The channels through which the cooling medium or the heating medium flows, for example are either tubes or hoses directly attached to the cell surface or channels being grinded into the metal end plates of each cell. Electrical heating elements like heater foils, jackets or rods, can be an option for cell heating, too.

Suitable heating media that can be used, for example, are air, nitrogen or thermal oils.

Suitable cooling media that can be used, for example, are air, nitrogen or thermal oils.

Besides using different media as heating medium and cooling medium, it is further possible to use the same medium for heating and cooling. In this case, the medium for heating and cooling preferably is air, nitrogen or thermal oils.

By designing the electrochemical cells as planar electrochemical cells, it is possible to provide a cell stack having a predetermined system power, because the number of electrochemical cells can be easily changed by reducing or increasing the number of electrochemical cells forming the cell stack. Further, due to the storage vessels for storing the anolyte and the catholyte it is also possible to vary the number of cell stacks that are attached to the same storage vessels for adapting the system power.

Preferably, the electrochemical energy storage device comprises at least two cell stacks with each cell stack comprising at least one planar electrochemical cell. Depending on the number of planar electrochemical cells in each cell stack and the voltage and amperage to be set, the at least two cell stacks may be connected in parallel or in series. Further, if more than two cell stacks are used, it is possible to provide at least two lines in which at least two cell stacks are connected in series and to connect the at least two lines in parallel. In this case it is particularly preferred that each line comprises the same number of electrochemical cells to generate the same voltage in each line. By connecting the cell stacks in parallel, the amperage can be set.

Besides connecting at least two cell stacks in series, it is also possible to increase the number of electrochemical cells in the cell stack. However, this has the disadvantage that for changing the system power, particularly for reducing the voltage, the whole cell stack has to be replaced, whereas when at least two cell stacks are connected in series it is possible to just remove one or more of the cell stacks, which allows for an easier change in system power.

Due to the little voltage obtained in one electrochemical cell, it is preferred that each cell stack comprises at least two planar electrochemical cells. The electrochemical cells preferably are separated by bipolar plates, wherein one side of each bipolar plate forms an outer wall of the first space of one electrochemical cell and the opposite side of each bipolar plate forms an outer wall of the second space of an adjacent electrochemical cell.

By stacking the electrochemical cells such that one side of each bipolar plate forms an outer wall of the first space of one electrochemical cell and the opposite side of each bipolar plate forms an outer wall of the second space of an adjacent electrochemical cell, a space containing anolyte of one electrochemical cell and a space containing catholyte of an adjacent cell are separated by the bipolar plate. This arrangement results in a connection in series of the electrochemical cells. By predefining the number of electrochemical cells to be stacked in one cell stack, the voltage of the cell stack can be set.

Bipolar plates that can be used for separating the electrochemical cells for example are made of either stainless steel or aluminum and an additional corrosion protection coating as mentioned above for cell housing. The bipolar plates can be designed as one solid layer but, in case an internal heating or cooling medium is needed in direct contact with the electrochemical reaction zone, they can also consist of two layers with flow channels between the layers.

If at least two electrochemical cells form a cell stack, it is preferred that the distance between the bipolar plate and the ion-conducting solid electrolyte in the first space is selected such that the electrical resistance is minimized, but still large enough for supplying reactants and removing reaction products.

For using the electrochemical energy storage device, the electrochemical energy storage devcie may be connected to a grid to which different electrical consumers may be connected. Further, it is also possible to connect a consumer directly to the electrochemical energy storage device. During supplying electrical energy to the consumers, the electrochemical energy storage device is discharged. For discharging, it is necessary that anolyte and catholyte are transported into the respective spaced of each electrochemical cell. For this purpose, the first storage vessel containing the anolyte is connected to the first space of each electrochemical cell and the second storage vessel is connected to the second space of each electrochemical cell. During discharging, ions of the anolyte are transported from the first space through the ion-conducting solid electrolyte into the second space, in which the ions of the electrolyte react with the catholyte, thereby forming a reaction product.

For transporting the anolyte from the first storage vessel into the first space of each electrochemical cell and for transporting the catholyte from the second storage vessel into the second space of each electrochemical cell any suitable device may be used.

Preferably, the electrochemical energy storage device comprises a first pump for transporting the anolyte from the first storage vessel into the first space of each electrochemical cell. Besides using a first pump, the anolyte may be transported from the first storage vessel into the first space of each electrochemical cell by using gas pressure, for example from a pressurized nitrogen vessel being connected to the first storage vessel.

For transporting the catholyte from the second storage device into the second space of each electrochemical cell, the electrochemical energy storage device preferably comprises a second pump. Besides using a second pump, the catholyte may be transported from the second storage vessel into the second space of each electrochemical cell by using gas pressure, for example from a pressurized nitrogen vessel being connected to the second storage vessel.

Due to the transport of the ions through the ion-conducting solid electrolyte, the volume of the material in the second space of each electrochemical cell increases. For this reason and to ensure a constant discharge of the electrochemical energy storage device during its use, it is necessary to remove the reaction product from the second space of each electrochemical cell. To remove the reaction product, it is possible to provide a second connection from the second space of each electrochemical cell to the second storage device. In this case, a circuit is formed, in which the catholyte is transported from the second storage vessel into the second space of each electrochemical cell and, after reaction with the ions of the anolyte, the reaction product formed is returned in the second storage vessel. The necessary force to transport the reaction product from the second space of each electrochemical into the second storage vessel is obtained by feeding the catholyte into the second space of each electrochemical cell using the second pump or by using gas pressure.

Due to the density difference of the catholyte and the reaction product, two phases are formed in the second storage vessel.

For charging the electrochemical energy storage device, the reaction product then is transported from the second storage vessel into the second space of each electrochemical cell, the reaction product is decomposed in the second space by applying electrical current, the ions of the anolyte are transported through the ion-conducting solid electrolyte into the first space of each electrochemical cell in which they are neutralized, and, due to the pressure resulting from the transport of the ions through the ion-conducting solid electrolyte, the thus obtained anolyte is transported into the first storage vessel. The catholyte obtained by decomposition of the reaction product is recycled into the second storage vessel and the necessary force for transporting the catholyte from the second space of each electrochemical cell into the second storage device is obtained either by reversal of the conveying direction of the second pump or by using an additional pump having a conveying direction reverse to the conveying direction of the second pump. Alternatively, gas pressure may be used for transporting the reaction product from the second storage vessel into the second space of the electrochemical cell, for example from a pressurized nitrogen vessel being connected to the second storage vessel.

Besides returning the reaction product into the second storage vessel, it is further possible and preferred that the electrochemical energy storage device comprises a third storage vessel for storing the reaction product obtained by reaction of the anolyte and the catholyte being connected to the second space of each electrochemical cell.

In this case, the reaction product is transported into the third storage vessel during discharge of the electrochemical energy storage device. The force that is necessary for transporting the reaction product into the third storage vessel is obtained the transport of the catholyte from the second storage vessel into the second space of each electrochemical cell and the transport of the ions of the anolyte through the ion-conducting solid electrolyte into the second space of each electrochemical cell. Due to the transport of the catholyte and the ions of the anolyte, the pressure in each electrochemical cell rises and by the increased pressure, the reaction product is forced into the third storage vessel.

Since for charging the electrochemical energy storage device it is necessary to transport the reaction product from the third storage vessel into the second space of each electrochemical cell, the electrochemical energy storage device preferably further comprises a third pump for transporting the reaction product into the second space during the charging process. Alternatively, gas pressure may be used for transporting the reaction product from the third storage vessel into the second space of each electrochemical cell, for example from a pressurized nitrogen vessel being connected to the third storage vessel.

Charging of the electrochemical energy storage device takes place in the same way as described above for the alternative with the reaction product being collected in the second storage vessel. Also when using the third storage vessel, the increasing pressure in the first space of each reaction space due to the transport of the ions of the anolyte through the ion-conducting solid electrolyte into the first space of each electrochemical cell is sufficient to provide the necessary force for further transporting the anolyte into the first storage vessel. The flow generated by the third pump also is sufficient for transporting the catholyte that is obtained during the charging process into the second storage vessel.

However, particularly if not the whole catholyte flowing through the second spaces of the electrochemical cells reacts with ions of the anolyte, it is preferred that no third storage vessel is used but that the reaction product is returned into the second storage vessel. In this case, besides the reaction product also non reacted catholyte is returned into the second storage vessel. In the second storage vessel, the non-reacted catholyte and the reaction product separate due to density differences and the separated catholyte can be returned into the second spaces of the electrochemical cells.

If, on the other hand, a third storage vessel is used for storing the reaction product and not the complete catholyte reacts in the second spaces of the electrochemical cells, the amount of catholyte needs to be provided in excess.

To be able to operate the electrochemical cell, it is necessary for the anode space and the cathode space to be separated by an ion-conducting solid electrolyte. Suitable solid electrolytes are dependent on the cathode material and anode material used. In general, a ceramic is used as solid electrolyte. An alkali metal, in particular sodium, is preferred as anode material and sulfur is preferred as cathode material. β-Aluminum oxide or β"-aluminum oxide is particularly useful as material for the solid electrolyte in such an electrochemical cell. This aluminum oxide is preferably stabilized, for example with magnesium oxide, lithium oxide or zirconium oxide.

As an alternative to β-aluminum oxide or β"-aluminum oxide, other ceramic materials can also be used as solid electrolyte. For example, the ceramic designated as NASCION^{®}, the composition of which is indicated in EP-A 0 553 400, can be used. As an alternative to ceramics, it is also possible to use glasses or zeolites and feldspars which conduct sodium ions. However, particular preference is given to sodium β"-aluminum oxide, sodium β-aluminum oxide, sodium β/β"-aluminum oxide. The ceramic is particularly preferably a β/β"-aluminum oxide having a ratio of β-aluminum oxide to β"-aluminum oxide in the range from 5:95 to 0.5:99.5, in particular in the range from 3:97 to 1:99 and very particularly preferably in the range from 2:98 to 1:99. The density of the ceramic of the solid electrolyte is preferably from 95 to 99% of the theoretical density, in particular from 97 to 99% of the theoretical density and very particularly preferably from 98 to 99% of the theoretical density, where the theoretical density is given by the density of the ion-conducting ceramic, in particular the β-aluminum oxide and/or β"-aluminum oxide, in the ideal crystal plus the density of the additives calculated over the proportion by volume.

The porous electrode preferably is made of a material which is inert in respect of the substances used in the electrochemical reaction. All chemically inert and electrically conductive materials which can be wetted by the cathode material are suitable as material for the electrode. Preferably, the porous electrode is made of a carbon containing material. Particularly, the carbon containing material comprises graphite.

For the materials participating in the electrochemical reaction to be able to flow through the electrode, the latter is, according to the invention, porous. This is, for example, achieved by the material of the porous electrodes being present in the form of a felt or nonwoven.

To improve mass transfer in the porous electrode, it is possible to supplement the chemically inert and electrically conductive material that can be wetted by the cathode material by a second material that is readily wettable by the reaction product of cathode material and anode material and does not necessarily have to be electrically conductive. Suitable materials which are readily wettable by the reaction product of cathode material and anode material are, in particular, oxide ceramics or glasses such as aluminum oxide (Al₂O₃), silicon dioxide, for example glass fibers, mixed oxides of aluminum with silicon, silicates and aluminosilicates and also zirconium oxide and mixtures of these materials. When a material which is readily wettable by the reaction product of anode material and cathode material is additionally comprised, the proportion of the material which is readily wettable by the reaction product of cathode material and anode material in the electrode is preferably less than 50% by volume, particularly preferably less than 40% by volume, and at least 5% by volume.

An improvement in mass transfer in the electrode can be achieved by the porous electrode being given a preferential direction by needling. The preferential direction preferably runs perpendicular to the solid electrolyte. Furthermore, an improvement in the mass transfer can be achieved by channel-like structures in the electrode, preferably perpendicular to the solid electrolyte.

Embodiments of the invention are shown in the figures and described in more detail in the following description.

In the figures:
- Figure 1: shows schematically an electrochemical energy storage device;
- Figure 2: shows schematically an electrochemical energy storage device with two stacks of electrochemical cells;
- Figure 3: shows schematically an electrochemical energy storage device with a third storage vessel.

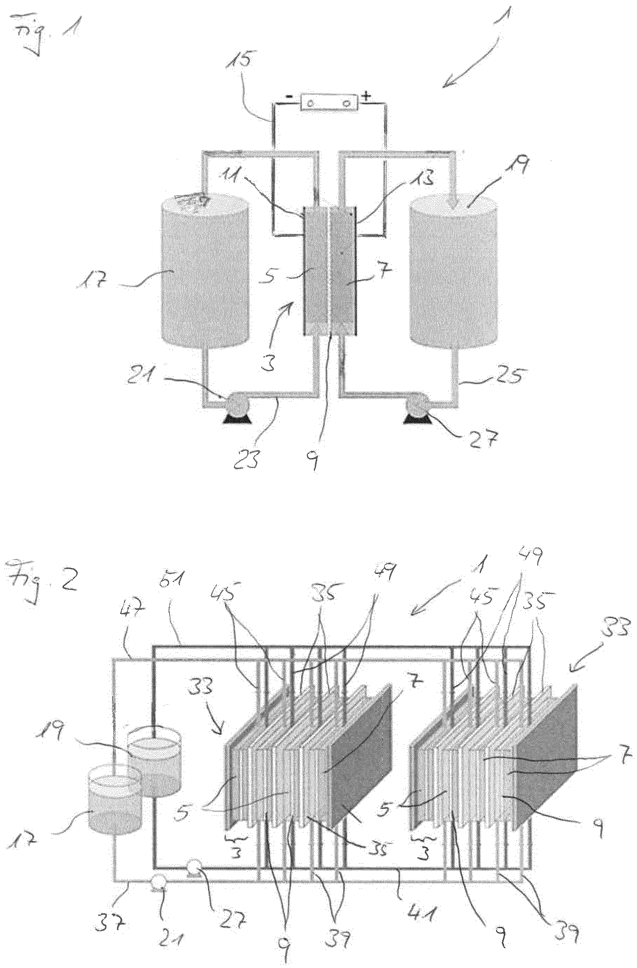

Figure 1 shows schematically an electrochemical energy storage device.

An electrochemical energy storage device 1 comprises a planar electrochemical cell 3 with a first space 5 and a second space 7. The first space 5 and the second space 7 are separated by an ion-conducting solid electrolyte 9.

Opposite the ion-conducting solid electrolyte 9, the first space 5 is closed with a first current collector 11 and the second space 7 is closed with a second current collector 13. The first current collector 11 and the second current collector 13 are connected to an electric circuit 15 to which any suitable consumer can be connected.

For operating the electrochemical cell 3, the first space 5 is connected to a first storage vessel 17 for an anolyte, preferably an alkali metal, particularly sodium, and the second space 7 is connected to a second storage vessel 19 for a catholyte, preferably sulfur.

During operation, anolyte is transported from the first storage vessel 17 into the first space 5 of the electrochemical cell 3. For transporting the anolyte, a first pump 21 is accommodated in a connecting line 23 which connects the first storage vessel 17 and the first space 5. The catholyte is transported from the second storage vessel 19 via a second connecting line 25 into the second space 7, wherein a second pump 27 is accommodated in the second connecting line 25 for generating the necessary flow.

During discharge, in the first space 5 the anolyte emits electrons to the first current collector 11, thereby forming ions. The ions of the anolyte pass the ion-conducting solid electrolyte 9 and enter the second space. In the second space, the ions of the anolyte react with the catholyte forming a reaction product, thereby accepting electrons. Since the alkali metal, particularly sodium is electrically conductive, it is not necessary to provide an electrode in the first space 5. However, for transporting the electrons to the position the ions of the anolyte react with the catholyte, a porous electrode 29 is provided in the second space 7. By using the porous electrode 29, the liquid catholyte and the liquid reaction product can flow through the second space 7 and the reaction product can be withdrawn from the second space 7 via a return line 31 and returned into the second storage vessel 19.

Figure 2 shows an electrochemical energy storage device comprising two stacks of electrochemical cells.

For increasing the voltage of the electrochemical energy storage device, it is preferred that at least one cell stack 33 is used, the cell stack 33 being made of at least two electrochemical cells 3 being stacked together. In the cell stack 33, the electrochemical cells 3 are separated by bipolar plates 35. Each bipolar plate 35 is arranged between the first space 5 of one electrochemical cell 3 and the second space 7 of an adjacent electrochemical cell 3, so that one side of the bipolar plate 35 forms the outer wall of the first space 5 of an electrochemical cell 3 and the other side of the bipolar plate 35 forms the outer wall of the second space 7 of the adjacent electrochemical cell 3. Each electrochemical cell 3 is designed as described above by comprising a first space 5, a second space 7 which encloses a porous electrode 29 and an ion-conducting solid electrolyte 9 separating the first space 5 and the second space 7.

The first space 5 of the first electrochemical cell 3 of the cell stack 33 is closed by a first current collector 11 and the second space 7 of the last electrochemical cell 3 of the cell stack 33 is closed by a second current collector 13.

By stacking the electrochemical cells 3 in such a way that a bipolar plate 35 is placed between the first space 5 of one electrochemical cell 3 and the second space 7 of the adjacent electrochemical cell, the electrochemical cells 3 of the cell stack 33 are connected in series.

For setting the power of the electrochemical energy storage device 1 in an easy way, the number of cell stacks 33 may be adapted. By connecting additional cell stacks 33 in series, the voltage of the electrochemical energy storage device 1 is increased and by connecting additional cell stacks 33 in parallel, the amperage is increased. If cell stacks 33 are connected in series and in parallel, it is preferred that lines of cell stacks 33 are connected in parallel and that each line of cell stacks 33 contains the same number of electrochemical cells of the same size.

For operating the electrochemical energy storage device 1 comprising cell stacks 33 with each comprising at least two electrochemical cells 3, the first spaces 5 of each electrochemical cell 3 are connected to the first storage vessel 17 and the second spaces 7 of each electrochemical cell 3 are connected to the second storage vessel 19.

By operating the first pump 21, the anolyte is transported into the first spaces 5 of each electrochemical cell 3 and by operating the second pump 27, the catholyte is transported into the second space 7 of each electrochemical cell 3. For distributing the anolyte into all first spaces 5, a distribution line 37 is connected to the first storage vessel 17, anolyte feed lines 39 are branched off the anolyte distribution line 37 and each first space 5 is connected to at least one of the anolyte feed lines 39. Accordingly, for distributing the catholyte into all second spaces 7, a catholyte distribution line 41 is connected to the second storage vessel 19, catholyte feed lines 43 are branched off the catholyte distribution line 41 and each second space 7 is connected to at least one of the catholyte feed lines 43.

For a continuous flow of the anolyte, at least one anolyte discharge line 45 is connected to each first space 5, the anolyte discharge lines 45 each mount into a collector line 47 which is connected to the first storage vessel 17. During operation of the electrochemical energy storage device 1, anolyte flows through the first spaces 5 of the electrochemical cells, ions of the anolyte are formed in the electrochemical cell by releasing electrons, the thus formed ions pass the ion-conducting solid electrolyte 9 and react with the catholyte, thereby accepting electrons so that the reaction product is electrically neutral. The reaction product is withdrawn from the second spaces 7 of the electrochemical cells 3 by discharge lines 49, wherein at least one discharge line 49 is connected to each of the second spaces 7. The discharge lines 49 are connected to a collector line 51 which is connected to the second storage vessel 19.

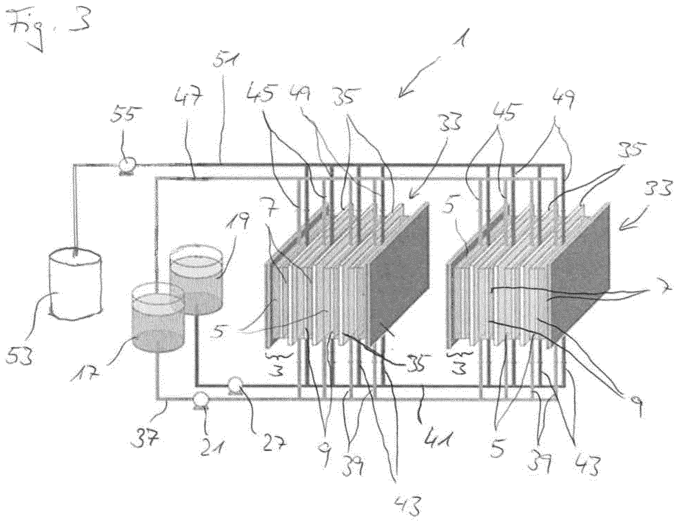

In an alternative embodiment which is shown in figure 3, the collector line 51 is connected to a third storage vessel 53 for collecting the reaction product. During discharging, the force needed for transporting the reaction product into the third storage vessel 53 is generated by the second pump 27. During charging the electrochemical energy storage device 1, the reaction product must be transported from the third storage vessel 53 into the second spaces 7 of the electrochemical cells 3. For this purpose, a third pump 55 is provided in the connecting line 57 that connects the third storage vessel 53 and the second spaces 7 of the electrochemical cells.

## Claims

1. An electrochemical energy storage device, comprising:
(a) a first storage vessel (17) for storing an anolyte;
(b) a second storage vessel (19) for storing a catholyte;
(c) a cell stack (33) comprising at least one planar electrochemical cell (3) with a first space (5) being connected to the first storage vessel (17), a second space (7) being connected to the second storage vessel (19), the first space (5) and the second space (7) being separated by an ion-conducting solid electrolyte (9) and a porous electrode (29) being accommodated in the second space (7).

2. The electrochemical energy storage device according to claim 1, wherein the electrochemical energy storage device (1) comprises at least two cell stacks (33) with each cell stack (33) comprising at least one planar electrochemical cell (3).

3. The electrochemical energy storage device according to claim 1 or 2, wherein the cell stack (33) comprises at least two planar electrochemical cells (3), the electrochemical cells (3) being separated by bipolar plates (35), wherein one side of each bipolar plate (35) forms an outer wall of the first space (5) of one electrochemical cell (3) and the opposite side of each bipolar plate (35) forms an outer wall of the second space (7) of an adjacent electrochemical cell (3).

4. The electrochemical energy storage device according to any of claims 1 to 3, further comprising a first pump (21) for transporting the anolyte from the first storage vessel (17) into the first space (5) of each electrochemical cell (3).

5. The electrochemical energy storage device according to any of claims 1 to 4, further comprising a second pump (27) for transporting the catholyte from the second storage vessel (19) into the second space (7) of each electrochemical cell (3).

6. The electrochemical energy storage device according to any of claims 1 to 5, further comprising a third storage vessel (53) for storing a reaction product obtained by reaction of the anolyte and the catholyte, the third storage vessel (53) being connected to the second space (7) of each electrochemical cell (3).

7. The electrochemical energy storage device according to claim 6, further comprising a third pump (55) for transporting the reaction product from the third storage vessel (53) into the second space (7) during a charging process.

8. The electrochemical energy storage device according to any of claims 1 to 7, wherein the anolyte is sodium and the catholyte is sulfur.

9. The electrochemical energy storage device according to any of claims 1 to 8, wherein the ion-conducting solid electrolyte (9) is made of β-aluminum oxide or β"-aluminum oxide.

10. The electrochemical energy storage device according to claim 9, wherein the β-aluminum oxide or β"-aluminum oxide is stabilized with magnesium oxide, lithium oxide or zirconium oxide.

11. The electrochemical energy storage device according to any of claims 1 to 10, wherein the porous electrode (29) is made of a carbon containing material.

12. The electrochemical energy storage device according to claim 11, wherein the carbon containing material comprises graphite.
